# EUROPÄISCHE PATENTSCHRIFT

(11) **EP 0 555 719 B1**
(45) Veröffentlichungstag und Bekanntmachung des Hinweises auf die Patenterteilung: **16.08.1995**
(21) Anmeldenummer: 93101507.7
(22) Anmeldetag: 01.02.1993
(51) Int. Cl.: B01D 53/56, B01D 53/88

(54) **Verfahren und Einrichtung zur Verminderung der Stickoxide in Rauchgas**
Process and installation for reducing the content of nitrogen oxides in flue gas
Procédé et installation pour la reduction des oxydes d'azote dans les gaz d'échappement

(30) Priorität: 14.02.1992 EP 92102495
(43) Veröffentlichungstag der Anmeldung: 18.08.1993
(73) Patentinhaber: SIEMENS AKTIENGESELLSCHAFT, 80333 München (DE)
(72) Erfinder: Sigling, Ralf, Dipl.-Ing., W-8523 Baiersdorf (DE); Lankes, Franz, W-8551 Hemhofen (DE)

(56) Entgegenhaltungen:
- EP-A- 0 386 328
- DE-A- 3 535 208
- US-A- 3 972 184
- US-A- 5 009 856

## Beschreibung

Die Erfindung bezieht sich auf ein Verfahren und eine Einrichtung zur Verminderung der Stickoxide in Rauchgas von Verbrennungsanlagen mit einer Verbrennungseinrichtung, mit der Verbrennungseinrichtung nachgeschalteten, in der Rauchgasströmung befindlichen Heizflächen und mit einem DeNOₓ-Katalysator.

Aufgrund der Emissionsgrenzwerte für Stickoxide (NOₓ) werden primäre und sekundäre Maßnahmen zur Minderung des NOₓ-Ausstoßes praktiziert. Unter Primärmaßnahmen versteht man Maßnahmen, bei denen die Bildung von Stickoxiden verringert wird. Da die Bildung der Stickoxide stark temperaturabhängig ist, gehören dazu u. a. alle Maßnahmen, mit denen die Flammtemperatur verringert wird. Unter Sekundärmaßnahmen versteht man alle Maßnahmen, mit denen die Stickoxidkonzentration im Rauchgas nachträglich vermindert wird. Hierzu werden üblicherweise DeNOₓ-Katalysatoren in die Rauchgasleitung integriert.

Bei Gasfeuerung können die geforderten Grenzwerte für NOₓ-Emissionen allein durch Primärmaßnahmen auch ohne Sekundärmaßnahmen erreicht werden. Beim Betrieb mit Heizöl jedoch werden, auch unter Anwendung der üblichen Primärmaßnahmen wie z. B. die Eindüsung von Wasser in die Flamme, die geforderten Grenzwerte nicht immer erreicht. In diesem Fall ist der Einsatz von DeNOₓ-Katalysatoren erforderlich. Mit dem Einsatz von DeNOₓ-Katalysatoren sind jedoch Nachteile verbunden. Es sind dies ein Druckverlust in der Rauchgasleitung mit der damit verbundenen Wirkungsgradverschlechterung der Anlage, eine wegen der damit verbundenen Ammoniumsulfatbildung besonders unerwünschte SO₂/SO₃-Konversion, eine allmähliche Desaktivierung der Katalysatoren und damit verbunden ein Katalysatornachladebedarf sowie eine Beschränkung der Anfahrgeschwindigkeit einer Gasturbine infolge eines maximal zulässigen Temperaturgradienten des Katalysators.

Verbrennungsanlagen wie z. B. Gasturbinen, die wechselweise mit Gas und Heizöl betrieben werden, benötigen in einem Fall den Einsatz von DeNOₓ-Katalysatoren, im anderen Fall jedoch nicht. Aus diesem Grund werden solche Verbrennungsanlagen zur Zeit meist mit DeNOₓ-Katalysatoren ausgestattet.

Der Erfindung liegt daher die Aufgabe zugrunde, ein Verfahren und eine Einrichtung anzugeben, die es erlauben, die erforderlichen Grenzwerte für die NOₓ-Emission einzuhalten und dabei die erwähnten Nachteile nur soweit wie unbedingt erforderlich in Kauf zu nehmen. Insbesondere soll es möglich sein, eine Gasturbinen-Anlage mit verschiedenen Energieträgern oder Brennstoffen im Rahmen bestehender Emissionsgrenzwerte zu betreiben und gleichzeitig bei allen Betriebszuständen der Anlage einen möglichst hohen Gesamtwirkungsgrad zu erreichen.

Bezüglich des Verfahrens wird diese Aufgabe erfindungsgemäß dadurch gelöst, daß dem DeNOₓ-Katalysator in Abhängigkeit von der Stickoxidkonzentration eine Position innerhalb oder außerhalb der Rauchgasströmung zugewiesen wird. Hierdurch werden die Nachteile, die mit dem Einsatz von DeNOₓ-Katalysatoren verbunden sind, nur dann in Kauf genommen, wenn dies infolge der Stickoxidkonzentration unbedingt erforderlich ist.

Alternativ wird diese Aufgabe erfindungsgemäß dadurch gelöst, daß dem DeNOₓ-Katalysator in Abhängigkeit vom ausgewählten Energieträger eine Position innerhalb oder außerhalb der Rauchgasströmung zugewiesen wird. Hierdurch wird ein einfaches Kriterium für den Einsatz des DeNOₓ-Katalysators vorgeschlagen.

Bezüglich der Einrichtung wird diese Aufgabe erfindungsgemäß dadurch gelöst, daß dem DeNOₓ-Katalysator eine Position innerhalb und außerhalb der vom Rauchgas durchströmten Leitung zuweisbar ist. Dadurch wird erreicht, daß sich der DeNOₓ-Katalysator nur dann im Rauchgasstrom befindet, wenn bestehende Emissionsgrenzwerte ansonsten überschritten würden.

Diese Aufgabe wird auch gelöst, wenn das Rauchgas erfindungsgemäß durch den in der Rauchgasleitung positionierten DeNOₓ-Katalysator oder an diesen vorbei leitbar ist. Hierdurch braucht der DeNOₓ-Katalysator nicht mehr bewegt zu werden. Es genügt, wenn man durch Betätigen von Klappen oder Schiebern den Rauchgasstrom umleitet.

In besonders zweckmäßiger Ausgestaltung der Erfindung kann eine an dem DeNOₓ-Katalysator vorbeiführende Bypassleitung und eine Umlenkeinrichtung für das Rauchgas vorgesehen sein. Hierdurch kann das Rauchgas bei Bedarf durch bloße Verstellung der Umlenkeinrichtung durch den DeNOₓ-Katalysator strömen oder durch die Bypassleitung am DeNOₓ-Katalysator vorbeiströmen. Aufgrund dieser Maßnahme vergrößert sich die Standzeit des DeNOₓ-Katalysators oder eines Moduls aus solchen Katalysatoren, weil bei der Auslegung des DeNOₓ-Katalysators für seine Standzeit nur die Zeit zugrundezulegen ist, während der sich der DeNOₓ-Katalysator im Rauchgasstrom befindet.

In besonders vorteilhafter Weiterbildung der Erfindung kann der DeNOₓ-Katalysator in die von Rauchgas durchströmte Leitung einbringbar und aus dieser wieder herausnehmbar sein. Hierdurch wird eine besondere Bypassleitung für das Rauchgas eingespart.

Es ist vorteilhaft, daß der DeNOₓ-Katalysator in den Rauchgasstrom hinein- und herausfahrbar ist. Dies könnte auch ein Drehen oder Schwenken sein. Die Bewegung des DeNOₓ-Katalysators erfolgt bevorzugt mit einer elektromotorischen Verstellung, worunter hier auch ein hydraulischer Antrieb verstanden wird.

Es kann besonders zweckmäßig sein, daß der DeNOₓ-Katalysator in der vom Rauchgas durchströmten Leitung in Strömungsrichtung des Rauchgases vor und/oder hinter einem Wärmetauscher angeordnet ist. Dies erlaubt es insbesondere bei einer Einrichtung, die eine Bypassleitung und eine Umlenkeinrichtung für das Rauchgas umfaßt, eine Kühlung des Rauchgases in Strömungsrichtung vor dem DeNOₓ-Katalysator und/oder eine Erwärmung des Rauchgases in Strömungsrichtung hinter dem DeNOₓ-Katalysator vorzunehmen, wenn das Rauchgas nicht durch die Bypassleitung strömt.

Eine vorteilhafte Weiterbildung der Erfindung besteht darin, daß der DeNOₓ-Katalysator in einen Abhitzekessel hineinfahrbar und aus diesem herausfahrbar ist. Dann ist beim Wechsel auf einen Energieträger, mit dem primärseitig weniger Stickoxide erzeugt werden, ein Betrieb ohne DeNOₓ-Katalysator und ohne die damit verbundenen Nachteile möglich.

In weiterer Ausgestaltung der Erfindung kann eine außerhalb der vom Rauchgas durchströmten Leitung liegende Parkposition zur Aufnahme des DeNOₓ-Katalysators vorgesehen sein. Auf diese Weise wird ein einfacher Zugang zu dem in der Parkposition befindlichen DeNOₓ-Katalysator ermöglicht, ohne daß deshalb eine Abschaltung der Verbrennungsanlage erforderlich ist. Darüber hinaus sind mit diesen Maßnahmen die Abmessungen eines Abhitzekessels kleiner ausführbar, da für Inspektionsbegehungen des DeNOₓ-Katalysators im Abhitzekessel kein Raum mehr erforderlich ist.

Es kann sinnvoll sein, als Parkposition ein Gehäuse zu verwenden, welches vor einer rauchgasdicht verschließbaren Öffnung in der Wand der vom Rauchgas durchströmten Leitung angeordnet ist, die den Durchtritt des DeNOₓ-Katalysators erlaubt. Dadurch wird verhindert, daß der DeNOₓ-Katalysator nach dem Herausfahren aus der vom Rauchgas durchströmten Leitung zu schnell abkühlt.

Es erweist sich als besonders zweckmäßig, die Parkposition mit einer Einrichtung zum Aufwärmen des DeNOₓ-Katalysators auszustatten. Dabei kann der DeNOₓ-Katalysator mit Rauchgas, mit Wasser, mit Dampf oder mittels einer elektrischen Heizung beheizbar sein. Hierdurch wird erreicht, daß der DeNOₓ-Katalysator in der Parkposition langsam, mit geringem Temperaturgradienten aufgeheizt oder auf Arbeitstemperatur gehalten wird und dann bei Bedarf schnell, ohne plötzlich größeren Temperatursprung in die vom Rauchgas durchströmte Leitung eingebracht werden kann. Des weiteren dient die Aufheizung oder Temperaturhaltung des DeNOₓ-Katalysators wesentlich dazu, in der Parkposition keine Taupunktunterschreitung (Wasser- und Säuretaupunkt) zuzulassen, wodurch Schädigungen des DeNOₓ-Katalysators aufgrund der Taupunktunterschreitung verhindert werden.

Zur Entstickung des Rauchgases können mehrere Katalysatorebenen vorgesehen sein, wobei jeder Katalysatorebene für sich allein eine Position innerhalb und außerhalb der vom Rauchgas durchströmten Leitung zuweisbar ist.

Ausführungsbeispiele der Erfindung werden anhand einer Zeichnung näher erläutert. Es zeigen:
Figur 1 eine teilweise aufgebrochene Darstellung einer Einrichtung mit einem Abhitzekessel und einem eingebauten DeNOₓ-Katalysator und mit einem Bypass für das Rauchgas;
Figur 2 eine teilweise aufgebrochene Darstellung eines Abhitzekessels und einem aus dem Abhitzekessel herausfahrbaren DeNOₓ-Katalysator;
Figur 3 eine Variante des Ausführungsbeispiels der Figur 2, bei der der DeNOₓ-Katalysator gleichzeitig nach zwei Seiten verschiebbar ist; und
Figur 4 einen vergrößerten Ausschnitt aus der Anordnung gemäß Figur 2 mit einer Heizeinrichtung für den DeNOₓ-Katalysator.

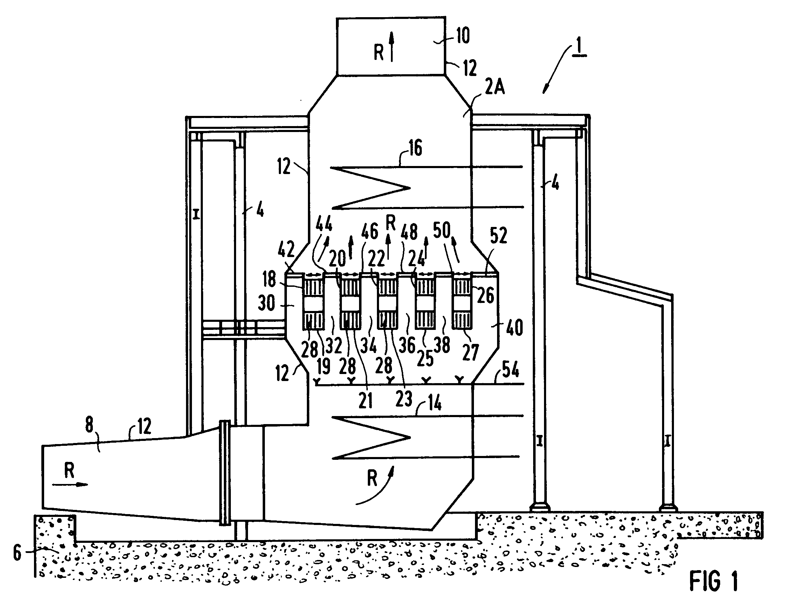

Die in Figur 1 dargestellte Einrichtung 1 zeigt einen Abhitzekessel 2A, der in einem Gerüst 4 aufgehängt ist, das auf einem Fundament 6 steht. Eingangsseitig ist der Abhitzekessel 2A mit einem Rauchgaskanal 8 einer (nicht dargestellten) Gasturbine verbunden. Der Abhitzekessel 2A mündet ausgangsseitig in einen Kamin 10. Der Rauchgaskanal 8, der Abhitzekessel 2A und der Kamin 10 bilden zusammen eine von Rauchgas R durchströmte Leitung 12. Im Abhitzekessel 2A erkennt man diverse Heizflächen 14, 16 sowie den in verschiedenen Elementkästen 18-27 eingebauten DeNOₓ-Katalysator 28. Im Ausführungsbeispiel sind in den Elementkästen 18-27 Katalysatorplatten 28 eingezeichnet. Es könnten ebensogut Wabenkatalysatoren sein. Die Elementkästen 18-27 sind in zwei Ebenen übereinander angeordnet. Zwischen den Elementkästen 18-27 sind an den Elementkästen 18-26 vorbeiführende Bypasskanäle 30-40 für das Rauchgas R vorgesehen. Diese Bypasskanäle 30-40 sind im Ausführungsbeispiel durch Schieber 42-52 geschlossen. Die Schieber 42-52 können statt über die Bypasskanäle 30-40 auch über die Elementkästen 18-27 geschoben werden. Der Querschnitt des Abhitzekessels 2A ist im Bereich des DeNOₓ-Katalystors 28 erweitert. Unter dem DeNOₓ-Katalysator 28 ist eine Eindüsvorrichtung 54 für Ammoniak angedeutet.

Beim Betrieb der Anlage strömt das Rauchgas R aus der (nicht dargestellten) Gasturbine über den Rauchgaskanal 8 und durch den Abhitzekessel 2A zum Kamin 10. Dabei gibt es zunächst einen Teil seiner Wärme an die dem DeNOₓ-Katalysator vorgeschalteten Heizflächen 14 ab. Beim Passieren der Eindüsvorrichtung 54 für Ammoniak wird dieser dem Rauchgas R zugemischt. Das mit Ammoniak angereicherte Rauchgas R wird durch die die Bypasskanäle 30-40 verschließenden Schieber 42-52 daran gehindert, an den Elementkästen 18-27 vorbei durch die Bypasskanäle 30-40 zu strömen. Beim Durchströmen der Elementkästen 18-27 werden die Stickoxide im Rauchgas an dem Katalysator 28 reduziert. Das entstickte Rauchgas R gibt mindestens einen Teil seiner restlichen Wärme an den dem DeNOₓ-Katalysator 28 nachgeschalteten Heizflächen 16 ab, bevor es in den Kamin 10 strömt.

In Fällen, in denen durch Primärmaßnahmen, wie etwa Wahl eines anderen Brennstoffes, weniger Stickoxide im Rauchgas entstehen als zulässig ist, können, die Schieber 42-52 von den in der Figur 1 gezeigten Positionen über die Elementkästen 18-27 geschoben werden, so daß die Bypasskanäle 30-40 frei werden. So werden die mit dem Katalysatoreinsatz verbundenen Nachteile vermieden und der DeNOₓ-Katalysator 28 geschont.

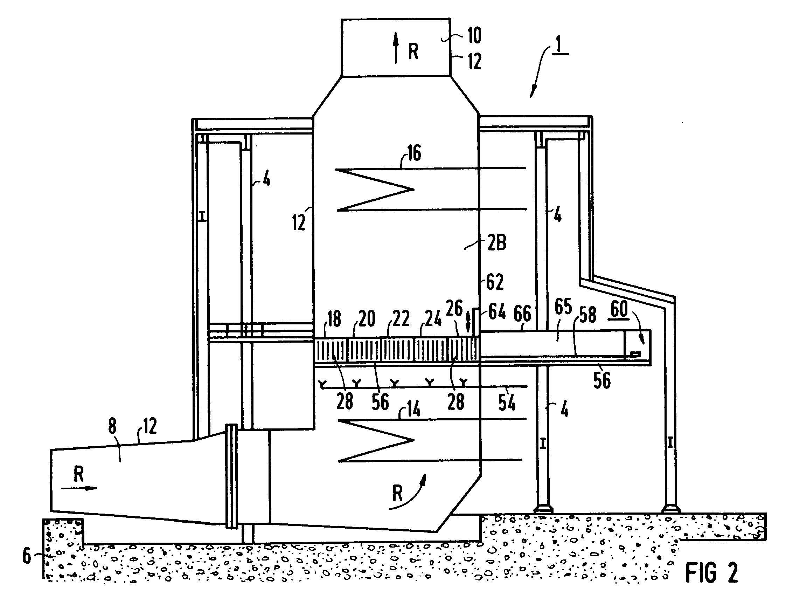

Die Figur 2 zeigt einen ähnlich aufgebauten und in einem Gerüst 4 aufgehängten Abhitzekessel 2B wie er anhand der Figur 1 beschrieben wurde. Jedoch befindet sich in dem in Figur 2 dargestellten Abhitzekessel 2B der DeNOₓ-Katalysator 28 in einer Führungsschiene 56. Er ist in eingefahrener Position dargestellt. Dabei bilden die Elementkästen 18-26 eine Katalysatorebene, die den gesamten Querschnitt des Abhitzekessels 2B ausfüllt. Die Elementkästen 18-26 sind verschiebbar auf der Führungsschiene 56 gelagert und mit einer Verschiebeeinrichtung 58, 60 verbunden. In der Wand 62 des Abhitzekessels 2B ist ein Schieber- oder Gehäuseverschluß 64 eingebaut, der ein außerhalb des Abhitzekessels 2B gelegenes Gehäuse 66, das zur Aufnahme des DeNOₓ-Katalysators 28 in seiner Parkposition 65, also in ausgefahrener Position, vorgesehen ist, rauchgasdicht gegenüber dem Abhitzekessel 2B verschließt. Ferner ist in dem Gehäuse 66 die Verschiebeeinrichtung 58, 60 angeordnet.

Mit der Verschiebeeinrichtung 58, 60 kann der DeNOₓ-Katalysator 28 bei Bedarf hydraulisch oder elektrisch entlang der Führungsschiene 56 aus dem Rauchgasstrom R im Abhitzekessel 2B herausgezogen und wieder hereingeschoben werden. Wenn, wie in dem in Figur 2 angenommenen Betriebsfall, Sekundärmaßnahmen zur Entstickung des Rauchgases R notwendig sind, befindet sich der DeNOₓ-Katalysator 28 ganz in dem Abhitzekessel 2B außerhalb des Gehäuses 66, also wie dargestellt in eingefahrener Position. Dies kann den Fall eines Gasturbinenbetriebs mit dem Energieträger Heizöl repräsentieren. Wenn jedoch die NOₓ-Konzentration im Rauchgas R durch Primärmaßnahmen, etwa durch Wahl von Erdgas als Energieträger, so weit abgesenkt wird, daß ein Betrieb ohne DeNOₓ-Katalysator 28 die zulässigen Grenzwerte unterschreitet, kann der DeNOₓ-Katalysator 28 auf der Führungsschiene 56 mittels der Verschiebeeinrichtung 58, 60 in die Parkposition 65, die im Ausführungsbeispiel von einem Gehäuse 66 umschlossen ist, gefahren werden. Alternativ zu dem in Figur 2 dargestellten Fall kann der DeNOₓ-Katalysator 28 auf dem Gerüst 4 in der Parkposition 65 ruhen, ohne von dem Gehäuse 66 umgeben zu sein. Eine weitere Möglichkeit zur Aufnahme des DeNOₓ-Katalysators 28 in ausgefahrener Position kann in einer hier nicht dargestellten Ausbuchtung im Abhitzekessel 2B bestehen, wobei sich der DeNOₓ-Katalysator 28 dann in direktem Wärmetausch mit dem Rauchgas R befindet. Dies kann auch der Fall sein, wenn sich der DeNOₓ-Katalysator 28 im rauchgasdichten Gehäuse 66 befindet und der Gehäuse- oder Schieberverschluß 64 aufgelassen wird.

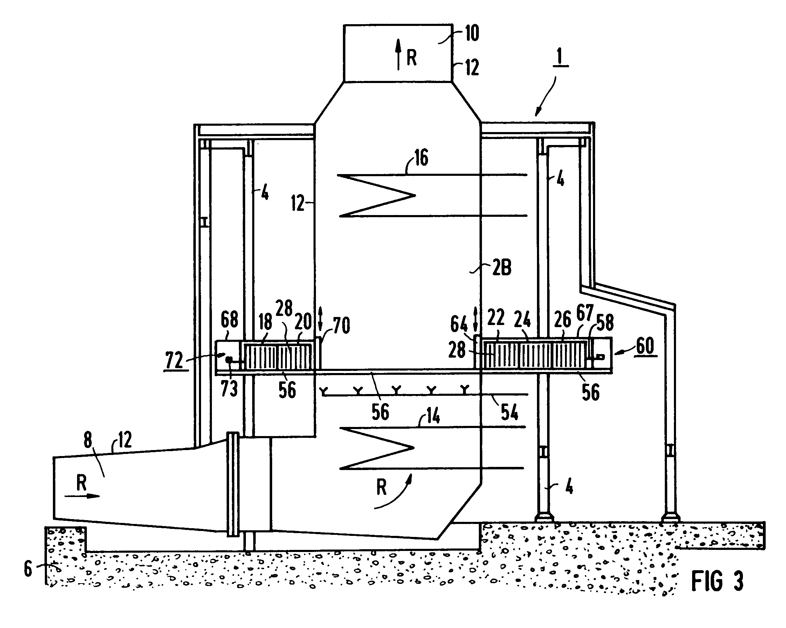

Figur 3 zeigt in Anlehnung an Figur 2 bei einem gleichartigen Abhitzekessel 2B eine horizontale Verstellmöglichkeit des DeNOₓ-Katalysators 28 nach zwei Seiten. Die Elementkästen 22, 24, 26 mit dem DeNOₓ-Katalysator 28 sind in einem Gehäuse 67 untergebracht. Zur Aufnahme der Elementkästen 18, 20 mit dem DeNOₓ-Katalysator 28 ist analog ein Gehäuse 68 vorgesehen, das von dem Gerüst 4 gestützt wird. Die Gehäuse 67, 68 befinden sich hierbei in derselben Ebene. Das Gehäuse 68 verfügt, ebenso wie das Gehäuse 67, über einen rauchgasdichten Schieber oder Gehäuseverschluß 70. Mittels einer Verschiebeeinrichtung 72, 73, die elektrisch oder hydraulisch sein kann, ist der DeNOₓ-Katalysator 28 in den Rauchgasstrom R im Abhitzekessel 2B einschiebbar und wieder herausziehbar. Die in Figur 3 dargestellte Konfiguration des DeNOₓ-Katalysators 28 kann aus Gründen der besseren Raumnutzung in der Umgebung des Abhitzekessels 2B erforderlich sein. Sie hat eine günstige mechanische Verschiebbarkeit, da nur relativ kleine Katalysatormassen bewegt werden müssen. Darüber hinaus erlaubt sie wegen der geringeren Tiefe der Gehäuse 67, 68 als das Gehäuse 66 in Figur 2 eine gleichmäßigere Temperierung der in den Gehäusen 67, 68 in Parkposition eingeschobenen Elementkästen 18-26.

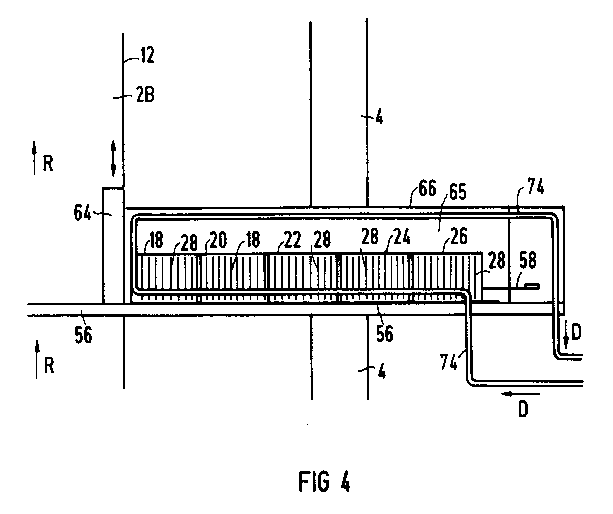

Figur 4 zeigt das Gehäuse 66 der Figur 2 in vergrößerter Darstellung. Man erkennt darin, daß das Gehäuse 66 mit einer Heizleitung 74 ausgerüstet ist. Diese kann bedarfsweise mit Dampf D oder Heißwasser beschickt werden.

Wenn sich der bevorstehende Einschub des DeNOₓ-Katalysators 28 in den Abhitzekessel 2B absehen läßt, kann der in dem Gehäuse 66 befindliche DeNOₓ-Katalysator 28 über die Heizleitung 74 allmählich erwärmt werden. Dann ist der DeNOₓ-Katalysator 28 keiner plötzlich größeren Temperaturänderung ausgesetzt, wenn er in dem Abhitzekessel 2B eingeschoben wird. Das vergrößert seine Standzeit infolge geringerer thermischer Wechselbeanspruchung. Darüber hinaus kann er auf diese Weise auch ganz auf Betriebstemperatur gebracht werden und so unmittelbar funktionsfähig sein. Bei häufigerem Ein- und Ausfahren kann er auch im Gehäuse 66 ständig temperiert gehalten werden.

Alternativ zum Ausführungsbeispiel in Figur 4 kann der DeNOₓ-Katalysator 28 statt über die Heizleitung 74 auch mittels einer elektrischen Heizung aufgewärmt werden.

Die Parkposition 65 bringt den weiteren Vorteil mit sich, daß der DeNOₓ-Katalysator 28 während des Betriebs der Verbrennungseinrichtung in der Parkposition 65 gewartet und ausgetauscht werden kann.

## Patentansprüche

1. Verfahren zur Verminderung der Stickoxide in Rauchgas von Verbrennungsanlagen mit einer Verbrennungseinrichtung, mit der Verbrennungseinrichtung nachgeschalteten, in der Rauchgasströmung befindlichen Heizflächen und mit einem DeNOₓ-Katalysator, **dadurch gekennzeichnet,** daß dem DeNOₓ-Katalysator (28) in Abhängigkeit von der Stickoxidkonzentration eine Position innerhalb oder außerhalb der Rauchgasströmung zugewiesen wird.

2. Verfahren zur Verminderung der Stickoxide in Rauchgas von Verbrennungsanlagen mit einer Verbrennungseinrichtung, mit der Verbrennungseinrichtung nachgeschalteten, in der Rauchgasströmung befindlichen Heizflächen und mit einem DeNOₓ-Katalysator, **dadurch gekennzeichnet,** daß dem DeNOₓ-Katalysator (28) in Abhängigkeit vom ausgewählten Energieträger eine Position innerhalb oder außerhalb der Rauchgasströmung zugewiesen wird.

3. Einrichtung zur Durchführung des Verfahrens nach Anspruch 1 oder 2, **dadurch gekennzeichnet,** daß dem DeNOₓ-Katalysator (28) eine Position innerhalb und außerhalb der vom Rauchgas (R) durchströmten Leitung (12) zuweisbar ist.

4. Einrichtung nach Anspruch 3, **dadurch gekennzeichnet,** daß das Rauchgas (R) durch den in der Rauchgasleitung (12) positionierten DeNOₓ-Katalysator (28) oder an diesem vorbei leitbar ist.

5. Einrichtung nach Anspruch 3 oder 4, **gekennzeichnet** durch eine am DeNOₓ-Katalysator (28) vorbeiführende Bypassleitung (30-40) und eine Umlenkeinrichtung (42-52) für das Rauchgas (R).

6. Einrichtung nach Anspruch 3 oder 4, **dadurch gekennzeichnet,** daß der DeNOₓ-Katalysator (28) in die vom Rauchgas (R) durchströmte Leitung (12) einbringbar und aus dieser wieder herausnehmbar ist.

7. Einrichtung nach Anspruch 6, **dadurch gekennzeichnet,** daß der DeNOₓ-Katalysator (28) in die vom Rauchgas (R) durchströmte Leitung (12) hinein- und herausfahrbar ist.

8. Einrichtung nach Anspruch 6 oder 7, **gekennzeichnet** durch eine elektromotorische Verstelleinrichtung (58, 60, 72, 73) für den DeNOₓ-Katalysator (28).

9. Einrichtung nach einem der Ansprüche 3 bis 8, **dadurch gekennzeichnet,** daß der DeNOₓ-Katalysator (28) in der vom Rauchgas (R) durchströmten Leitung (12) in Strömungsrichtung des Rauchgases (R) vor einem Wärmetauscher (16) angeordnet ist.

10. Einrichtung nach einem der Ansprüche 3 bis 9, **dadurch gekennzeichnet,** daß der DeNOₓ-Katalysator (28) in der vom Rauchgas (R) durchströmten Leitung (12) in Strömungsrichtung des Rauchgases (R) hinter einem Wärmetauscher (14) angeordnet ist.

11. Einrichtung nach einem der Ansprüche 3 bis 10, **dadurch gekennzeichnet,** daß der DeNOₓ-Katalysator (28) in einen Abhitzekessel (2B) hineinfahrbar und aus diesem herausfahrbar ist.

12. Einrichtung nach einem der Ansprüche 3 bis 11, **gekennzeichnet** durch eine außerhalb der vom Rauchgas (R) durchströmten Leitung (12) liegende und zur Aufnahme des DeNOₓ-Katalysators (28) vorgesehene Parkposition (65).

13. Einrichtung nach Anspruch 12, **dadurch gekennzeichnet,** daß mindestens eine weitere, außerhalb der vom Rauchgas (R) durchströmten Leitung (12) liegende Parkposition zur Aufnahme einer weiteren Ebene oder eines weiteren Elementkastens (18, 20) des DeNOₓ-Katalysators (28) vorgesehen ist.

14. Einrichtung nach einem der Ansprüche 3 bis 13, **dadurch gekennzeichnet,** daß als Parkposition ein Gehäuse (66, 68) verwendet ist, welches vor einer rauchgasdicht verschließbaren Öffnung in der Wand der vom Rauchgas durchströmten Leitung (12) angeordnet ist, die den Durchtritt des DeNOₓ-Katalysators (28) erlaubt.

15. Einrichtung nach einem der Ansprüche 3 bis 11, **dadurch gekennzeichnet,** daß eine Ausbuchtung (66, 67, 68) in der vom Rauchgas (R) durchströmten Leitung (12) zur Aufnahme des DeNOₓ-Katalysators (28) vorgesehen ist.

16. Einrichtung nach einem der Ansprüche 3 bis 11 und 15, **dadurch gekennzeichnet,** daß zur Aufnahme einer weiteren Ebene oder eines weiteren Elementkastens des DeNOₓ-Katalysators (28) mindestens eine weitere Ausbuchtung (68) in der vom Rauchgas (R) durchströmten Leitung (12) vorgesehen ist.

17. Einrichtung nach einem der Ansprüche 12 bis 16, **dadurch gekennzeichnet,** daß die Parkposition (65) eine Einrichtung (70) zum Aufwärmen des DeNOₓ-Katalysators (28) umfaßt.

18. Einrichtung nach einem der Ansprüche 15 bis 16, **dadurch gekennzeichnet,** daß die Ausbuchtung (6, 67, 68) eine Einrichtung (74) zum Aufwärmen des DeNOₓ-Katalysators (28) umfaßt.

19. Einrichtung nach einem der Ansprüche 3 bis 18, **dadurch gekennzeichnet,** daß der DeNOₓ-Katalysator (28) über ein Heizmedium, z. B. Rauchgas (R), Heißwasser, Dampf, beheizbar ist.

20. Einrichtung nach einem der Ansprüche 3 bis 18, **dadurch gekennzeichnet,** daß der DeNOₓ-Katalysator (28) mittels einer elektrischen Heizung beheizbar ist.

21. Einrichtung nach einem der Ansprüche 3 bis 20, **dadurch gekennzeichnet,** daß der nicht vom Rauchgas (R) durchströmte DeNOₓ-Katalysator (28) über eine Trennwand zum Rauchgas (R) beheizbar ist.

22. Einrichtung nach einem der Ansprüche 3 bis 21, **dadurch gekennzeichnet,** daß jede Katalysatorebene für sich allein in eine Position innerhalb und außerhalb der vom Rauchgas (R) durchströmten Leitung (12) zuweisbar ist.

## Claims

1. Method for reducing nitrogen oxides in flue gas of combustion systems, having a combustion apparatus, heating surfaces downstream of the combustion apparatus in the flue gas stream, and a deNOₓ catalyst, characterised in that the deNOₓ catalyst (28) is assigned to a position inside or a position outside the flue gas stream as a function of a nitrogen oxide concentration.

2. Method for reducing nitrogen oxides in flue gas of combustion systems, having a combustion apparatus, heating surfaces downstream of the combustion apparatus in the flue gas stream, and a deNOₓ catalyst, characterised in that the deNOₓ catalyst (28) is assigned to a position inside or a position outside the flue gas stream as a function of a selected energy carrier.

3. Apparatus for implementing the method according to claim 1 or 2, characterised in that the deNOₓ catalyst (28) can be assigned to a position inside or a position outside the line (12) through which the flue gas (R) flows.

4. Apparatus according to claim 3, characterised in that the flue gas (R) can be conducted through the deNOₓ catalyst (28) or past the deNOₓ catalyst (28) positioned in the flue gas line (12).

5. Apparatus according to claim 3 or 4, characterised by a bypass line (30-40) bypassing the deNOₓ catalyst (28), and a deflector (42-52) for the flue gas (R).

6. Apparatus according to claim 3 or 4, characterised in that the deNOₓ catalyst (28) can be introduced into and removed again from the line (12) through which the flue gas (R) flows.

7. Apparatus according to claim 6, characterised in that the deNOₓ catalyst (28) can be moved into and out of the line (12) through which the flue gas (R) flows.

8. Apparatus according to claim 6 or 7, characterised by an electromotive adjusting device (58, 60, 72, 73) for the deNOₓ catalyst (28).

9. Apparatus according to one of claims 3 to 8, characterised in that the deNOₓ catalyst (28) is disposed upstream of a heat exchanger (16) in the line (12) through which the flue gas (R) flows, in the flow direction of the flue gas (R).

10. Apparatus according to one of claims 3 to 9, characterised in that the deNOₓ catalyst (28) is disposed downstream of a heat exchanger (14) in the line (12) through which the flue gas (R) flows, in the flow direction of the flue gas (R).

11. Apparatus according to one of claims 3 to 10, characterised in that the deNOₓ catalyst (28) can be moved into and out of a waste heat boiler (2B).

12. Apparatus according to one of claims 3 to 11, characterised by a parking position (65) disposed outside the line (12) through which the flue gas (R) flows, the said parking position being provided for receiving the deNOₓ catalyst (28).

13. Apparatus according to claim 12, characterised in that at least one further parking position disposed outside the line (12) through which the flue gas (R) flows is provided for receiving a further level or a further element case (18, 20) of the deNOₓ catalyst (28).

14. Apparatus according to one of claims 3 to 13, characterised in that a housing (66, 68) is used as the parking position, this housing being disposed upstream of an opening formed in the wall of the line (12) through which the flue gas (R) flows, which opening enables passage of the deNOₓ catalyst (28) and can be closed in a flue-gas-tight manner.

15. Apparatus according to one of claims 3 to 11, characterised in that a bay (66, 67, 68) is provided in the line (12) through which the flue gas (R) flows, for receiving the deNOₓ catalyst (28).

16. Apparatus according to one of claims 3 to 11 and 15, characterised in that, for receiving a further level (12) or a further element case of the deNOₓ catalyst (28), at least one further bay (68) is provided in the line (12) through which the flue gas (R) flows.

17. Apparatus according to one of claims 12 to 16, characterised in that the parking position (65) comprises a device (70) (sic) for heating the deNOₓ catalyst (28).

18. Apparatus according to one of claims 15 to 16, characterised in that the bay (66, 67, 68) comprises a device (74) for heating the deNOₓ catalyst (28).

19. Apparatus according to one of claims 3 to 18, characterised in that the deNOₓ catalyst (28) can be heated by way of a heating medium, for example flue gas (R), hot water, steam.

20. Apparatus according to one of claims 3 to 18, characterised in that the deNOₓ catalyst (28) can be heated by means of an electric heater.

21. Apparatus according to one of claims 3 to 20, characterised in that the deNOₓ catalyst (28) through which flue gas (R) does not flow can be heated by way of a partition separating the deNOₓ catalyst (28) from the flue gas (R).

22. Apparatus according to one of claims 3 to 21, characterised in that each catalyst level can be separately assigned to a position inside and a position outside the line (12) through which the flue gas (R) flows.

## Revendications

1. Procédé pour la réduction des oxydes d'azote dans des gaz d'échappement d'installations de combustion munies d'un dispositif de combustion, de surfaces chauffantes se trouvant dans le courant des gaz d'échappement montées à la suite du dispositif de combustion et d'un catalyseur DeNOₓ, caractérisé en ce ou'on attribue au catalyseur DeNOₓ (28) une position à l'intérieur ou à l'extérieur du courant des gaz d'échappement, en fonction de la concentration en oxyde d'azote.

2. Procédé pour la réduction des oxydes d'azote dans des gaz d'échappement d'installations de combustion munies d'un dispositif de combustion, de surfaces chauffantes se trouvant dans le courant des gaz d'échappement montées à la suite du dispositif de combustion et d'un catalyseur DeNOₓ, caractérisé en ce ou'on attribue au catalyseur DeNOₓ (28) une position à l'intérieur ou à l'extérieur du courant des gaz d'échappement, en fonction du porteur d'énergie sélectionné.

3. Dispositif pour la mise en oeuvre du procédé selon la revendication 1 ou 2, caractérisé en ce ou'on peut attribuer au catalyseur DeNOₓ (28) une position à l'intérieur et à l'extérieur du conduit (12) traversé par les gaz d'échappement (R).

4. Dispositif selon la revendication 3, caractérisé en ce que les gaz d'échappement (R) peuvent être guidés pour traverser le catalyseur DeNOₓ (28) positionné dans le conduit des gaz d'échappement (12) ou pour passer devant lui.

5. Dispositif selon la revendication 3 ou 4, caractérisé par un conduit de déviation (30-40) passant devant le catalyseur DeNOₓ (28) et par un dispositif de déviation (42-52) pour les gaz d'échappement (R).

6. Dispositif selon la revendication 3 ou 4, caractérisé en ce que le catalyseur DeNOₓ (28) peut être inséré dans le conduit (12) traversé par les gaz d'échappement (R) et peut être à nouveau retiré de ce dernier.

7. Dispositif selon la revendication 6, caractérisé en ce que le catalyseur DeNOₓ (28) peut être introduit et ressorti du conduit (12) traversé par les gaz d'échappement (R).

8. Dispositif selon la revendication 6 ou 7, caractérisé par un dispositif de réglage par électromoteur (58, 60, 72, 73) pour le catalyseur DeNOₓ (28).

9. Dispositif selon l'une quelconque des revendications 3 à 8, caractérisé en ce que le catalyseur DeNOₓ (28) est disposé dans le conduit (12) traversé par les gaz d'échappement (R) dans le sens d'écoulement des gaz d'échappement (R) devant un échangeur de chaleur (16).

10. Dispositif selon l'une quelconque des revendications 3 à 9, caractérisé en ce que le catalyseur DeNOₓ (28) est disposé dans le conduit (12) traversé par les gaz d'échappement (R) dans le sens d'écoulement des gaz d'échappement (R) derrière un échangeur de chaleur (14).

11. Dispositif selon l'une quelconque des revendications 3 à 10, caractérisé en ce que le catalyseur DeNOₓ (28) peut être introduit et ressorti dans une chaudière de récupération (2B).

12. Dispositif selon l'une quelconque des revendications 3 à 11, caractérisé par une position de garage (65) disposée à l'extérieur du conduit (12) traversé par les gaz d'échappement (R) et prévue pour que vienne s'y loger le catalyseur DeNOₓ (28).

13. Dispositif selon la revendication 12, caractérisé en ce qu'on prévoit au moins une position de garage supplémentaire située à l'extérieur du conduit (12) traversé par les gaz d'échappement (R) pour que vienne s'y loger un autre plan ou un autre caisson modulaire (18, 20) du catalyseur DeNOₓ (28).

14. Dispositif selon l'une quelconque des revendications 3 à 13, caractérisé en ce que, comme position de garage, on utilise un logement (66, 68) disposé devant une ouverture qui peut être fermée de manière étanche aux gaz d'échappement, pratiquée dans la paroi du conduit (12) traversé par les gaz d'échappement, qui permet le passage du catalyseur DeNOₓ (28).

15. Dispositif selon l'une quelconque des revendications 3 à 11, caractérisé en ce qu'on prévoit un évidement (66, 67, 68) dans le conduit (12) traversé par les gaz d'échappement (R) pour que vienne s'y loger le catalyseur DeNOₓ (28).

16. Dispositif selon l'une quelconque des revendications 3 à 11 et selon la revendication 15, caractérisé en ce qu'on prévoit au moins un autre évidement (68) dans le conduit (12) traversé par les gaz d'échappement (R) pour que vienne s'y loger un autre plan ou un autre caisson modulaire du catalyseur DeNOₓ (28).

17. Dispositif selon l'une quelconque des revendications 12 à 16, caractérisé en ce que la position de garage (65) comprend un dispositif (70) pour réchauffer le catalyseur DeNOₓ (28).

18. Dispositif selon l'une quelconque des revendications 15 à 16, caractérisé en ce que l'évidement (6, 67, 68) comprend un dispositif (74) pour le réchauffement du catalyseur DeNOₓ (28).

19. Dispositif selon l'une quelconque des revendications 3 à 18, caractérisé en ce que le catalyseur DeNOₓ (28) peut être chauffé à l'aide d'un milieu de chauffage par exemple des gaz d'échappement (R), de l'eau chaude et de la vapeur.

20. Dispositif selon l'une quelconque des revendications 3 à 18, caractérisé en ce que le catalyseur DeNOₓ (28) peut être chauffé au moyen d'un chauffage électrique.

21. Dispositif selon l'une quelconque des revendications 3 à 20, caractérisé en ce que le catalyseur DeNOₓ (28), qui n'est pas traversé par des gaz d'échappement (R), peut être chauffé à l'aide d'une paroi de séparation pour les gaz d'échappement (R).

22. Dispositif selon l'une quelconque des revendications 3 à 21, caractérisé en ce qu'on peut attribuer une position à l'intérieur et à l'extérieur du conduit (12) traversé par les gaz d'échappement (R) pour chaque plan de catalyseur en soi.
